# EUROPÄISCHE PATENTSCHRIFT

(11) **EP 3 932 836 B1**
(45) Veröffentlichungstag und Bekanntmachung des Hinweises auf die Patenterteilung: **07.06.2023**
(21) Anmeldenummer: 21178934.2
(22) Anmeldetag: 11.06.2021
(51) Int. Cl.: B65G 41/00, B07C 5/344, B65G 43/08

(54) **FÖRDERBANDANORDNUNG UND VERFAHREN ZUM ENTFERNEN VON FREMDKÖRPERN AUS EINEM SCHÜTTGUT**
CONVEYOR BELT ARRANGEMENT AND METHOD FOR REMOVING FOREIGN BODIES FROM BULK MATERIAL
AGENCEMENT DE BANDE DE TRANSPORT ET PROCÉDÉ D'ÉLIMINATION DE CORPS ÉTRANGERS D'UNE MARCHANDISE EN VRAC

(30) Priorität: 01.07.2020 DE 102020117400
(43) Veröffentlichungstag der Anmeldung: 05.01.2022
(73) Patentinhaber: Keestrack N.V., 3740 Munsterbilzen (BE)
(72) Erfinder: HOOGENDOORN, Frederik, 3740 Munsterbilzen (BE); WEINHEIMER, Harald, 4694 Ohlsdorf (AT)
(74) Vertreter: Griepenstroh, Jörg

(56) Entgegenhaltungen:
- CN-U- 210 411 102
- DE-A1- 10 162 711
- JP-A- H04 303 318
- JP-A- H06 343 946
- JP-A- H08 318 225
- JP-A- H11 165 878
- JP-A- 2002 316 100
- US-A1- 2007 102 325
- US-A1- 2016 243 591

## Beschreibung

Die Erfindung betrifft eine mobile Zerkleinerungsanlage zur Zerkleinerung mineralischer Primärrohstoffe oder Sekundärrohstoffe mit einer Förderbandanordnung mit den Merkmalen des Patentanspruchs 1 sowie ein Verfahren zum Entfernen von Fremdkörpern aus einem Schüttgut mit den Merkmalen des Patentanspruchs 4.

Raupenmobile Zerkleinerungsanlagen, z.B. Prallbrecher dienen zur Zerkleinerung mineralischer Primärrohstoffe bzw. zur Zerkleinerung mineralischer Recyclingmaterialien, die als Sekundärrohstoffe bezeichnet werden. Diese Rohstoffe liegen als Schüttgüter vor und werden vor Ort zerkleinert. Sie werden dosiert einem Zerkleinerer zugeführt. Dies geschieht in der Regel über eine trichterförmige Aufgabeeinheit, die beispielsweise mit einem Radlader beschickt wird. Das Schüttgut wird von der Aufgabeeinheit auf ein Förderband aufgegeben, dass das Schüttgut in zu dem Zerkleinerer befördert. Primär- und Sekundärrohstoffe können unerwünschte Fremdkörper enthalten, die insbesondere bei schnell rotierenden Zerkleinerern erhebliche Schäden und Produktionsunterbrechungen nach sich ziehen können. Fremdkörper sind insbesondere Eisen- oder Nichteisenmetalle, die in einem Zerkleinerer, der nach dem Prallbrechprinzip funktioniert, nicht zerkleinert werden können. Es kann sich um metallische Bauteile von vorgeschalteten Maschinen (Bagger, Brecher, Schaufeln, etc.) handeln. Beispiele für Fremdkörper sind ein abgebrochener Baggerzahn in einem Primärwerkstoff oder bei der Verarbeitung von Recyclingmaterialien Armierungen oder sogar Munitionsreste. Um den Zerkleinerer vor Beschädigungen zu schützen bzw. um vermeidbare Produktionsausfälle zu verhindern, müssen diese Fremdkörper effektiv aus dem aufgegebenen Schüttgut ausgeschleust werden.

Die JP H11-165 878 A offenbart eine mobile Zerkleinerungsanlage zum Zerkleinern mineralischer Rohstoffe, bei welcher Boden, der auch Steine enthalten kann, auf ein Förderband gegeben wird. Sind die Steine zu groß, kann das Förderband reversiert werden, so dass die zu großen Steine über eine rückwärtige Klappe vom Förderband herunter transportiert werden können. Anschließend wird auf die normale Förderrichtung umgeschaltet. JP H11-165 878 A offenbart die Merkmale vom Oberbegriff des Anspruchs 1.

Es ist aus der JP 2002-316 100 A bekannt, Schüttgüter per Videoüberwachung auf Fremdkörper zu kontrollieren und bei Detektion eines Fremdkörpers die Transportrichtung eines Förderbandes zu reversieren, um den Fremdkörper zusammen mit dem Schüttgut auszuschleusen und in einer Auffangwanne aufzufangen. Das Ganze kann automatisiert über eine Steuerung erfolgen, die das Förderband ansteuert.

Aus der CN 210 411 102 U ist eine Förderbandanordnung bekannt, mittels welcher Kohle zu einer Zerkleinerungseinheit transportiert werden soll. Dabei werden mehrere Förderbänder parallel geschaltet. An jedem Förderband ist ein Metalldetektor angeordnet. Wird auf einem Förderband ein Metallstück detektiert, kann das einzelne Förderband reversiert werden, während die anderen Förderbänder weiterhin Kohle zu der Zerkleinerungseinheit transportieren. Dadurch kann ein unterbrechungsfreier Betrieb ermöglicht werden.

Die JP 2006-281 192 A offenbart eine Förderbandanordnung, bei welcher mittels einer Detektionseinheit Produkte und Produktabweichungen erkannt werden. Wird eine Produktabweichung erkannt, wird ein Signal generiert, um das Transportband, auf dem die Produkte entlang einer Detektionsvorrichtung geführt werden, zu reversieren und das Produkt in eine andere Richtung zu lenken.

In ähnlicher Weise wird in der US 2016/0243591 A1 eine Messstation beschrieben, bei welcher ein Schüttgut auf radioaktive Anteile untersucht werden soll. Ein Förderband führt das Schüttgut an einer Messeinrichtung vorbei hin zu einem Abwurfende. Je nachdem, ob auf dem Förderband kontaminiertes Schüttgut detektiert wurde, wird ein weiteres Förderband, das sich unterhalb des Abwurfendes befindet, reversiert, wenn es sich um kontaminiertes Schüttgut handelt bzw. in die Hauptförderrichtung bewegt. Dadurch kann kontaminiertes Schüttgut von unkontaminiertem Schüttgut getrennt werden.

Der Erfindung liegt die Aufgabe zugrunde, eine Förderbandanordnung aufzuzeigen, mit welcher es möglich ist, nahezu ohne Produktionsunterbrechung Fremdkörper aus dem Schüttgut auszuschleusen. Ferner soll ein Verfahren zum effektiven Entfernen von Fremdkörpern aus einem Schüttgut ohne Produktionsunterbrechung aufgezeigt werden.

Der erste Teil der Aufgabe wird durch eine mobile Zerkleinerungsanlage mit den Merkmalen des Patentanspruchs 1 gelöst. Ein erfindungsgemäßes Verfahren zum Entfernen von Fremdkörpern aus einem Schüttgut ist Gegenstand des Patentanspruchs 4.

Die erfindungsgemäße Förderbandanordnung umfasst ein Förderband, um ein Schüttgut in eine erste Förderrichtung zu einem Abwurfende des Förderbandes zu transportieren, sowie eine Detektionsvorrichtung, die an dem Förderband angeordnet ist, um unerwünschte Fremdkörper in dem Schüttgut auf dem Förderband zu detektieren.

Ferner umfasst die Förderbandanordnung eine Steuerung. Die Steuerung ist signalverarbeitend mit der wenigstens einen Detektionsvorrichtung verbunden. Die Steuerung ist ferner dazu ausgebildet, einen Antrieb des Förderbandes anzusteuern. Das Förderband ist mittels der Steuerung reversierbar. Das Reversieren erfolgt, um bei einem detektierten Fremdkörper das Schüttgut auf dem Förderband einschließlich des Fremdkörpers entgegengesetzt zu der ersten Förderrichtung auszutragen. Die Ansteuerung des Förderbandes mittels der Steuerung erfolgt auch, um das Förderband anschließend wieder zu Reversieren und in die erste Förderrichtung zu bewegen, um die Produktion fortzusetzen, d. h. um weiteres Schüttgut in die erste Förderrichtung zu transportieren.

Die erfindungsgemäße Förderbandanordnung zeichnet sich dadurch aus, dass keine aufwendigen Modifikationen am Förderband erforderlich sind. Es ist lediglich erforderlich, das Förderband zu stoppen, bevor der Fremdkörper von dem Förderband in den Zerkleinerer gelangt. Das Förderband kann schnell reversiert werden, um das mit dem Fremdkörper belastete Schüttgut sofort auszutragen. Anschließend wird das Förderband wieder in der ursprünglichen Förderrichtung betrieben. Es ist bei dieser Vorgehensweise ein höheres Sicherheitsniveau erreichbar, als bei einer Separierung des Fremdkörpers mit einer Separiervorrichtung unmittelbar von dem Förderband. Es wird durch das Reversieren sichergestellt, dass der Fremdkörper absolut zuverlässig von dem Förderband entfernt wird. Das potentielle Risiko, dass das Separieren des Fremdkörpers scheitert besteht nicht.

Ein weiterer Vorteil ist, dass an dem Förderband keine Separiermittel, z.B. ein Aushebmagnet erforderlich, wodurch die Bauhöhe, insbesondere einer raupenmobilen Zerkleinerungsanlage, geringer gehalten werden kann. Wichtig ist allerdings, dass wenigstens eine Detektionsvorrichtung an dem Förderband angeordnet ist, die zuverlässig Fremdkörper detektiert.

Das Förderband wird zur Reduzierung der Schüttgutmenge zwischen der Aufgabeeinheit und dem Zerkleinerer vorzugsweise so kurz wie möglich ausgeführt. Dadurch ist die Menge des auszuschleusendes Schüttgutes zusammen mit dem Fremdkörper gering.

Die Förderbandanordnung besitzt eine Ausschleusevorrichtung, die dazu ausgebildet ist, das ausgetragene Schüttgut aufzunehmen. Eine solche Ausschleusevorrichtung besitzt Mittel, um das ausgeschleuste Schüttgut schnell aufzunehmen, so dass es nicht zu einem Rückstau des ausgeschleusten Schüttgutes kommen kann.

Die Ausschleusevorrichtung weist zu diesem Zweck ein weiteres Förderband auf, das das ausgeschleuste Schüttgut von dem ersten Förderband entfernt. Insbesondere ist das weitere Förderband der Ausschleusevorrichtung quer oder im Wesentlichen quer zum Förderband mit der Detektionsvorrichtung angeordnet. Dadurch ist es möglich, größere Mengen des ausgeschleusten Schüttgutes schnell zu verhalden, ohne dass es zu einem Materialstau im Produktionsprozess kommt.

Zudem ist es zweckmäßig, die Detektionsvorrichtung möglichst nahe am Aufgabepunkt des Schüttstoffes auf das Förderband anzuordnen. Dadurch bleibt auch bei höheren Förderbandgeschwindigkeiten genügend Zeit, das Förderband rechtzeitig zum Stillstand zu bringen und zu reversieren. Durch das Reversieren wird der Fremdkörper ein zweites Mal an der Detektionsvorrichtung vorbeigeführt und die Detektion des Fremdkörpers kann verifiziert werden.

Wenn der Fremdkörper mit dem ausgetragenen Schüttgut in der Ausschleusevorrichtung aufgenommen worden ist, wird der Fremdkörper von dem Schüttgut in einer Separiervorrichtung der Ausschleusevorrichtung separiert. Bei der Separiervorrichtung kann es sich um einen Aushebemagneten oder auch um einen Trommelseparierer handeln. Die wenigstens eine Separiervorrichtung dient insbesondere dazu, Eisenmetalle abzuschneiden oder auch Nichteisenmetalle. Das von dem Fremdkörper gereinigte Schüttgut wird verhaldet und kann in Produktionsvorgang zurückgeführt werden.

Die Steuerung steht signalverarbeitend mit der Detektionsvorrichtung in Verbindung. Die Detektionsvorrichtung erzeugt ein Signal und die Steuerung erhält ein Signal, dass ein Fremdkörper entdeckt wurde. Die Steuerung muss nun bewirken, dass das Förderband stillgesetzt wird und im nächsten Schritt reversiert wird.

In einer weiteren vorteilhaften Ausgestaltung der Erfindung ist die Aufgabe des Schüttgut dosierbar. Das heißt, dass das Schüttgut dosiert auf das Förderband der Förderbandanordnung gegeben werden kann. Die Zufuhr von Schüttgut soll gestoppt werden, wenn das Förderband angehalten und reversiert wird. Dadurch ist die Materialmenge geringer, die von der Ausschleusevorrichtung aufgenommen werden muss. Auch ist die von der Separiervorrichtung zu prüfende Menge des Schüttguts geringer.

In vorteilhafter Weise wird die Aufgabe von Schüttgut über die Aufgabeeinheit sofort gestoppt, wenn ein Fremdkörper auf dem Förderband detektiert wird. Ist die Aufgabeeinheit leer, spielt das Stoppen der Dosierung keine Rolle. In einem kontinuierlichen Produktionsprozess sollte die Dosierung der Aufgabeeinheit allerdings gestoppt werden, bis der Fremdkörper aus dem Produktionsprozess entfernt wurde und das Förderband wieder in der ersten Förderrichtung betrieben wird.

Eine solche Förderbandanordnung ist insbesondere Bestandteil einer mobilen Zerkleinerungsanlage, insbesondere eines Prallbrechers zur Zerkleinerung mineralischer Primärrohstoffe oder Sekundärrohstoffe. Eine Zerkleinerungsanlage ist mobil, wenn Sie ein Fahrwerk mit Rädern oder Ketten besitzt oder Kufen aufweist, auf denen die Zerkleinerungsanlage gleitend bewegt werden kann.

Das erfindungsgemäße Verfahren zum Entfernen von Fremdkörpern aus einem Schüttgut weist mithin folgende Schritte auf:
a) Zunächst wird Schüttgut auf eine Förderbandanordnung gegeben und in eine erste Förderrichtung des Förderbandes transportiert.
b) Das Schüttgut wird auf dem Förderband an wenigstens einer Detektionsvorrichtung der Förderbandanordnung vorbeigeführt, um das Schüttgut auf unerwünschte Fremdkörper zu überprüfen.
c) Die wenigstens eine Detektionsvorrichtung signalisiert einer Steuerung, wenn ein Fremdkörper detektiert wurde.
d) Die Steuerung steuert einen Antrieb des Förderbandes und reversiert das Förderband, so dass das Schüttgut mit dem Fremdkörper entgegen der ersten Förderrichtung ausgetragen wird, worauf im letzten Schritt die Steuerung das Förderband reversiert, um bei Schritt a) fortzufahren, d. h. neues Schüttgut auf der Förderbandanordnung in Förderrichtung zu transportieren.

Die Ansteuerung des Förderbandes über den Antrieb zum Reversieren ist so zu verstehen, dass die Drehrichtung der Antriebsrollen des Förderbandes geändert wird. Zum Antrieb im Sinne der Erfindung gehört nicht nur der eigentliche Antriebsmotor, der insbesondere hydraulisch oder elektromechanisch ausgebildet ist. Auch ein etwaiges Getriebe zählt zum Antrieb des Förderbandes. Die Steuerung des Antriebes kann im Sinne der Erfindung auch die Ansteuerung eines etwaigen Getriebes bedeuten, um die Förderrichtung des Förderbandes einzustellen.

Das erfindungsgemäße Verfahren basiert auf der Verwendung einer Förderanordnung, wie sie oben beschrieben wurde. Der Kernpunkt ist, dass der Fremdkörper mit dem Schüttgut ausgeschleust wird. Das ausgetragene Schüttgut wird an eine Ausschleusevorrichtung übergeben. Diese befindet sich vorzugsweise unterhalb des Austragendes des Förderbandes und nimmt das Schüttgut mit dem Fremdkörper auf, um es anschließend weiterzutransportieren. Das ausgeschleuste Schüttgut wird von dem Fremdkörper in wenigstens einer Separiervorrichtung befreit.

Das ausgeschleuste Schüttgut wird von dem weiteren Förderband verhaldet und kann wieder zurück in den Produktionsprozess gegeben werden, während die separierten Fremdkörper insbesondere über eine Schurre getrennt deponiert werden.

Ein wesentlicher Vorteil des erfindungsgemäßen Verfahrens ist, dass das eigentliche Abscheiden bzw. Separieren des Fremdkörpers nicht auf dem Förderband erfolgt, das zu dem Zerkleinerer führt, sondern separat durchgeführt wird. Der ganze Prozess ist dadurch wesentlich einfacher, sicherer und besser steuerbar.

Es ist auch möglich, nicht die gesamte Menge des Schüttgutes von dem Förderband zu entfernen. Aufgrund der Förderbandgeschwindigkeit ist bekannt, in welchem Bereich des Förderbandes sich der Fremdkörper befindet. Bei einem längeren Förderband und bei einer Detektionsvorrichtung, die nah am Aufgabepunkt angeordnet ist, kann es ausreichend sein, beispielsweise nur den zuletzt aufgegebenen Anteil des Schüttgutes, in dem sich der Fremdkörper mit Sicherheit befindet, durch Reversieren auszutragen, während der in Förderrichtung vordere Anteil des Schüttgutes auf dem Förderband verbleibt. Daher stellt es keine Gefahr dar, das Förderband auch nur sehr kurzfristig zu reversieren. Es wird daher als günstig angesehen, wenn der Aufgabepunkt für das Schüttgut nah am Austragende angeordnet ist und nicht am Abwurfende des Förderbandes.

Ein weiterer Vorteil des erfindungsgemäßen Verfahrens ist, dass unterschiedliche Separiervorrichtungen verwendet werden können, wie beispielsweise eine magnetische Antriebstrommel, ein Austragorgan oder ein Aushebemagnet. Diese Baugruppen würden die Bauhöhe im Bereich der Förderbandanordnung erhöhen. Dies erschwert bei einer raupenmobilen Anlage die Einhaltung der zulässigen Gesamthöhe und setzt damit der Baugröße und damit der Produktionskapazität einer solchen raupenmobilen Zerkleinerungsanlage vermeidbare Grenzen. Die wenigstens eine Detektionsvorrichtung kann unter dem Obertrum des Förderbandes angeordnet sein, d. h. in die Förderbandanordnung integriert sein. Dadurch ist die Detektionsvorrichtung vor dem Schüttgut geschützt und die Bauhöhe bleibt gering. Auch diese Merkmale tragen dazu bei, dass der zur Verfügung stehende Bauraum der gesamten Maschine effektiver genutzt werden kann, insbesondere im Hinblick auf die Bauhöhe einer raupenmobilen und damit auch auf einem Tieflader transportierbaren Zerkleinerungsanlage, die im Straßenverkehr zu verschiedenen Einsatzorten transportiert werden kann.

Die Erfindung nachfolgend anhand von in schematischen Zeichnungen dargestellten Ausführungsbeispielen erläutert. Es zeigen:
- Figur 1: eine perspektivische Ansicht einer Förderbandanordnung;
- Figur 2: eine perspektivische Darstellung eines Förderbandes der Förderbandanordnung;
- Figur 3: eine perspektivische Darstellung einer Ausschleusevorrichtung;
- Figur 4: eine raupenmobile Zerkleinerungsanlage mit einer Förderbandanordnung der Figuren 1 bis 3 in einer Seitenansicht;
- Figur 5: ein Schaubild für eine Steuerung für die Förderbandanordnung.

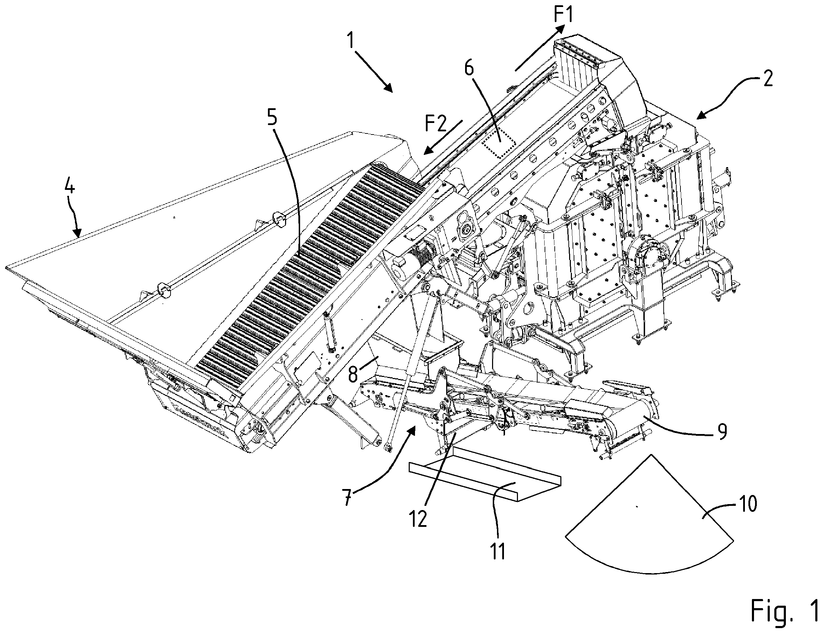

Die Figur 1 zeigt eine Förderbandanordnung 1 in Verbindung mit einem Zerkleinerer 2 in Form eines Prallbrechers. Die Förderbandanordnung 1 umfasst ein Förderband 3, um zu zerkleinerndes Schüttgut 10 zum Zerkleinerer 2 zu transportieren. Bei dem Schüttgut 10 handelt es sich um einen mineralischen Primärrohstoff oder einen Sekundärrohstoff (Recyclingmaterial). Das Schüttgut 10 soll in dem Zerkleinerer 2 zerkleinert und dann einer Weiterverarbeitung zugeführt werden. Das Schüttgut 10 wird als Ausgangsmaterial in eine Aufgabeeinheit 4 gegeben. Von dort wird Schüttgut 10 über ein Transportband 5 dosiert auf das Förderband 3 übergeben. In diesem Sinne ist die Aufgabeeinheit 4 dosierbar. Das Schüttgut 10 wird in der Bildebene von links nach rechts transportiert. Der Pfeil F1 bezeichnet die erste Förderrichtung. Sie führt das Schüttgut 10 zum Zerkleinerer 2.

In dem Schüttgut 10 können unerwünschte Fremdkörper, z.B. aus Metall enthalten sein. Diese sollten nicht in den Zerkleinerer 2 gelangen. Hierzu befindet sich hier an dem Förderband 3 eine Detektionsvorrichtung 6. Zur besseren Veranschaulichung der Lage der Detektionsvorrichtung 6 ist das umlaufende Band, auf das das Schüttgut 10 aufgegeben wird, nicht dargestellt.

Wenn ein Fremdkörper durch die Detektionsvorrichtung 6 detektiert wird, wird das Förderband 3 angehalten. Der Antrieb wird kurz gestoppt. Die erste Förderrichtung F1 wird umgekehrt. Das Förderband 3 wird nun entgegen der ersten Förderrichtung F1 in Richtung der Förderrichtung F2 betrieben. Der Fremdkörper wird zusammen mit dem Schüttgut 10 auf dem Förderband 3 ausgetragen. Vorher wird jedoch das Transportband 5 der Aufgabeeinheit 4 gestoppt, so dass möglichst kein weiteres Material auf das Förderband 3 gelangt. Das ausgetragene Material wird von einer Ausschleusevorrichtung 7 aufgefangen. Sie befindet sich unterhalb des Förderbandes 3. Über einen Trichter 8 gelangt das ausgeschleuste Material auf ein weiteres Förderband 9. Das Förderband 9 verläuft in der Bildebene quer zum ersten Förderband 3 mit der Detektionsvorrichtung 6. Das ausgeschleuste Schüttgut 10 wird verhaldet. Das Schüttgut 10 hat beim Transport über das weitere Förderband 9 der Ausschleusevorrichtung 7 eine Separiervorrichtung 12 passiert, welche die besagten Fremdkörper aus dem Schüttgut 10 abtrennt und in einen Aufnahmebehälter 11 überführt.

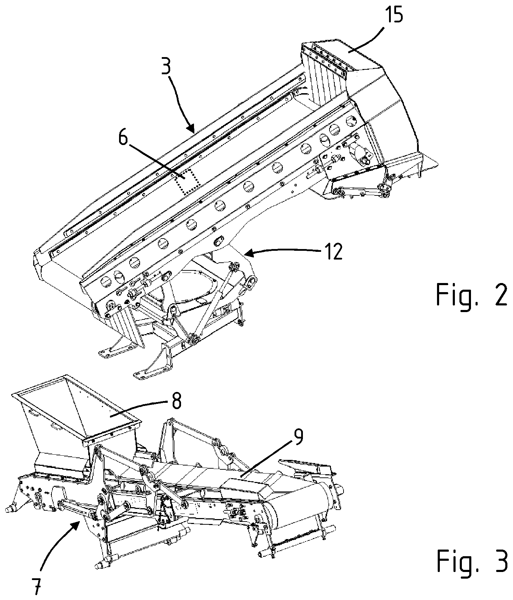

Die Figuren 2 und 3 zeigen das erste Förderband 3 der Förderbandanordnung 1 und die Ausschleusevorrichtung 7, also die wesentliche Bestandteil, um detektierte Fremdkörper aus dem Produktionsprozess zu entfernen. Das erste Förderband 3 ist an einer Tragvorrichtung 12 befestigt. Darüber ist die Neigung und Position des Förderbandes 3 einstellbar.

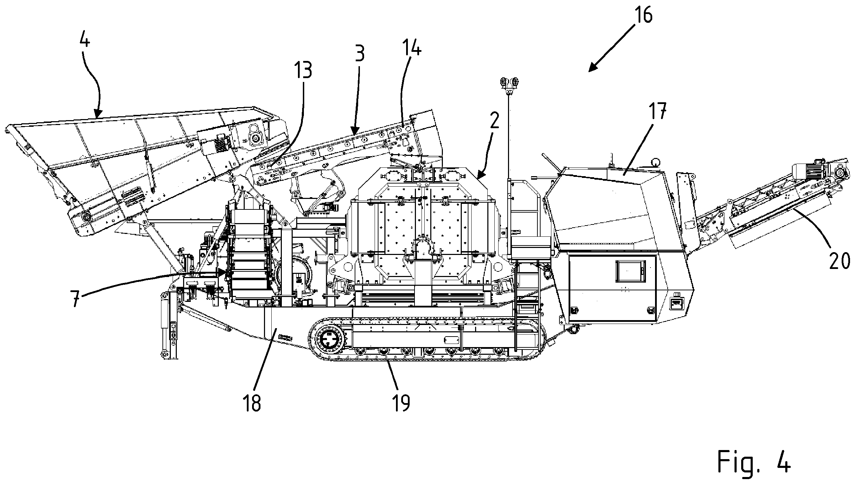

Die Figur 4 zeigt in einer Seitenansicht die Betriebsposition einer raupenmobilen Zerkleinerungsanlage 16. Es ist erkennbar, dass die Aufgabeeinheit 4 das Schüttgut 10 nahe eines hinteren Endes 13 bzw. unteren Endes des Förderbandes 3 auf das Förderband 3 übergibt. Das in Transportrichtung ansteigende Förderband 3 führt nun das Schüttgut 10 an der Detektionsvorrichtung 6 vorbei, die sich etwa im mittleren Längenbereich des Förderbandes 3 befindet. Am Abwurfende 14 des Förderbandes 3 befindet sich eine Abdeckung 15 am Förderband 3. Die Abdeckung 15 deckt während des Betriebes die Eintrittsöffnung des Zerkleinerers 2 ab. Die Eintrittsöffnung befindet sich auf der Oberseite des Zerkleinerers 2.

Bei der Erfindung erfolgt das Separieren des Fremdkörpers mittels einer Separiervorrichtung, die der Ausschleusevorrichtung 7 zugeordnet ist. Das Separieren erfolgt dann, wenn sich das mit dem Fremdkörper verunreinigte Schüttgut 10 nicht mehr auf dem ersten Förderband 3 befindet. Das Separieren von Fremdkörpern kann daher bereits im Übergang vom hinteren Ende 13 des Förderbandes 3 zum Trichter 8 der Ausschleusevorrichtung 7 erfolgen oder innerhalb des Wirkungsbereichs der Ausschleusevorrichtung 7.

Die Seitenansicht der Figur 4 zeigt eine raupenmobile Zerkleinerungsanlage 16, die als Hauptkomponenten einen Hauptantrieb 17, den Zerkleinerer 2 und die entsprechenden Zu- und Abführorgane für das Schüttgut aufweist. Alle Komponenten sind auf einem Rahmen 18 befestigt, der von einem Raupenfahrwerk 19 getragen wird. Das zerkleinerte Schüttgut 10 wird über ein weiteres Förderband 20 aus der raupenmobilen Zerkleinerungsanlage 16 abtransportiert. In nicht näher dargestellter Weise kann ein zusätzliches Siebdeck vorgesehen sein, um Überkorn herauszufiltern und erneut in den Produktionsprozess zurückzuführen.

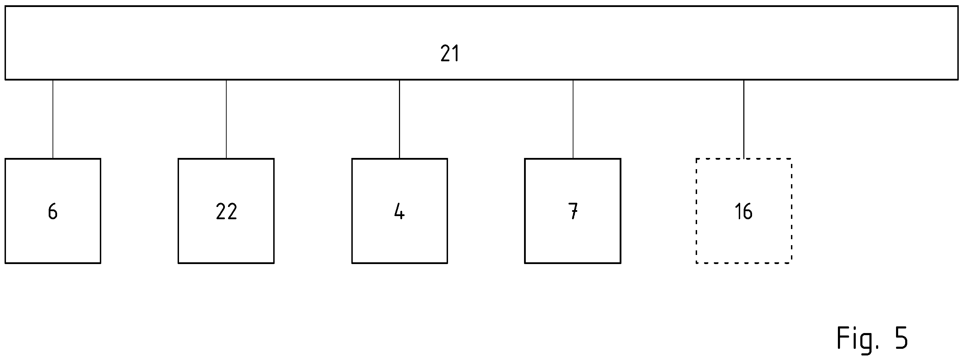

Die Figur 5 zeigt rein schematisch, eine Steuerung 21, um die Förderbandanordnung 1 und gegebenenfalls weitere Komponenten anzusteuern. Die Steuerung 21 ist mit der Detektionsvorrichtung 6 verbunden. Die Steuervorrichtung 21 kann von der Detektionsvorrichtung 6 das Signal erhalten, dass ein Fremdkörper ermittelt wurde. In diesem Fall stoppt die Steuerung 21 einen Antrieb 22 des Förderbandes 3 und stoppt darüber hinaus das Transportband 5 der Aufgabeeinheit 4. Nun wird kein weiteres Schüttgut 10 auf das Förderband 3 übergeben. Das Förderband 3 wird anschließend reversiert, um das Schüttgut 10 mit dem Fremdkörper auszutragen und an die Ausschleusevorrichtung 7 zu übergeben. Hierzu muss die Ausschleusevorrichtung 7 aktiviert werden oder aktiviert sein.

Die Steuerung 21 kann auch mit weiteren Komponenten der Förderbandanordnung 1, d. h. weiteren Antrieben, Sensoren, Messmitteln etc. verbunden sein, um beispielsweise den Materialfluss volumetrisch oder auch hinsichtlich des Gewichts zu erfassen. Es kann sich bei der Steuerung 21 auch um eine übergeordnete Steuerung einer raupenmobilen Zerkleinerungsanlage 16 handeln, die nicht ausschließlich dafür vorgesehen ist, die erfindungsgemäße Förderbandanordnung 1 und die damit zusammenwirkenden Komponenten anzusteuern.

### Bezugszeichen:

- 1 -: Förderbandanordnung
- 2 -: Zerkleinerer
- 3 -: Förderband
- 4 -: Aufgabeeinheit
- 5 -: Transportband
- 6 -: Detektionsvorrichtung
- 7 -: Ausschleusevorrichtung
- 8 -: Trichter
- 9 -: Förderband von 7
- 10 -: Schüttgut
- 11 -: Aufnahmebehälter
- 12 -: Separiervorrichtung
- 13 -: hinteres/unteres Ende von 3
- 14 -: Abwurfende von 3
- 15 -: Abdeckung von 3
- 16 -: raupenmobile Zerkleinerungsanlage
- 17 -: Hauptantrieb von 16
- 18 -: Rahmen
- 19 -: Fahrwerk
- 20 -: weiteres Förderband von 16
- 21 -: Steuerung
- 22 -: Antrieb von 3

- F1 -: erste Förderrichtung
- F2 -: zweite Förderrichtung

## Patentansprüche

1. Mobile Zerkleinerungsanlage (16) zur Zerkleinerung mineralischer Primärrohstoffe oder Sekundärrohstoffe mit einer Förderbandanordnung (1), die folgende Merkmale aufweist:
a) Ein Förderband (3), um ein Schüttgut (10) in eine erste Förderrichtung (F1) zu einem Abwurfende (14) des Förderbandes (3) zu transportieren;
b) Einen Antrieb (22) des Förderbandes (3), wobei die Steuerung (21) dazu ausgebildet ist, den Antrieb (22) des Förderbandes (3) anzusteuern;
c) Das Förderband (3) ist mittels der Steuerung (21) reversierbar, um bei einem Fremdkörper das Schüttgut (10) auf dem Förderband (3) einschließlich des Fremdkörpers entgegengesetzt zu der ersten Förderrichtung (F1) auszutragen, um anschließend wieder zur reversieren, um weiteres Schüttgut (10) in der ersten Förderrichtung (F1) zu transportieren;
**gekennzeichnet durch** folgende Merkmale:
d) Wenigstens eine Detektionsvorrichtung (6), die an dem Förderband (3) angeordnet ist, um unerwünschte Fremdkörper in dem Schüttgut (10) auf dem Förderband (3) zu detektieren;
e) Eine Steuerung (21), die signalverarbeitend mit der wenigstens einen Detektionsvorrichtung (6) verbunden ist, um bei einem detektierten Fremdkörper das Förderband (3) zu reversieren;
f) Eine Ausschleusevorrichtung (7) ist dazu ausgebildet, das ausgetragene Schüttgut (10) aufzunehmen;
g) Die Ausschleusevorrichtung (7) weist ein weiteres Förderband (9) auf;
h) Die Ausschleusevorrichtung (7) weist wenigstens eine Separiervorrichtung (12) auf, um Fremdkörper von dem Schüttgut zu separieren.

2. Mobile Zerkleinerungsanlage (16) nach Anspruch 1, **dadurch gekennzeichnet, dass** die Separiervorrichtung (12) Mittel zu Erkennung von Eisenmetallen und/oder Nicht-Eisen-Metallen aufweist.

3. Mobile Zerkleinerungsanlage (16) nach Anspruch 1 oder 2, mit einer dosierbaren Aufgabeeinheit (4) zur Aufgabe von Schüttgut (10) auf das Förderband (3), wobei die Aufgabeeinheit (4) mit der Steuerung (21) verbunden ist, um das Aufgeben von Schüttgut (10) zu stoppen, wenn ein Fremdkörper detektiert worden ist.

4. Verfahren zum Entfernen von Fremdkörpern aus einem Schüttgut (10) bei einer mobilen Zerkleinerungsanlage (16) gemäß den Merkmalen eines der Ansprüche 1 bis 3 mit den Schritten:
a) ein Schüttgut (10) wird auf eine Förderbandanordnung (1) der mobilen Zerkleinerungsanlage (16) gegeben und in eine erste Förderrichtung (F1) eines Förderbandes (3) der Förderbandanordnung (1) transportiert;
b) das Schüttgut (10) auf dem Förderband (3) wird an wenigstens einer Detektionsvorrichtung (6) der Förderbandanordnung (1) vorbei geführt, um das Schüttgut (10) auf unerwünschte Fremdkörper zu überprüfen;
c) die wenigstens eine Detektionsvorrichtung (6) signalisiert einer Steuerung (21), wenn ein Fremdkörper detektiert wurde;
d) die Steuerung (21) steuert einen Antrieb (22) des Förderbandes (3) und reversiert das Förderband (3), so dass das Schüttgut (10) mit dem Fremdkörper entgegen der ersten Förderrichtung (F1) ausgetragen wird;
e) das ausgetragene Schüttgut (10) wird an eine Ausschleusevorrichtung (7) übergeben, die das Schüttgut (10) mit dem Fremdkörper aufnimmt und weitertransportiert;
f) die Ausschleusevorrichtung (7) weist wenigstens eine Separiervorrichtung (12) auf, welche den Fremdkörper von dem ausgetragenen Schüttgut (10) separiert;
g) die Steuerung (21) reversiert das Förderband (3), um bei Schritt a) fortzufahren.

5. Verfahren nach Anspruch 4, **dadurch gekennzeichnet, dass** mittels der wenigstens einen Separiervorrichtung (12) metallische Fremdkörper separiert werden.

6. Verfahren nach Anspruch 4 oder 5, **dadurch gekennzeichnet, dass** das Schüttgut (10) von einer dosierfähigen Aufgabeeinheit (4) auf das Förderband (3) gegeben wird, wobei die Steuerung (21) die Aufgabeeinheit (4) ansteuert, wobei die Aufgabe von Schüttgut (10) gestoppt wird, wenn die wenigstens eine Detektionsvorrichtung (6) einen Fremdkörper detektiert.

7. Verfahren nach einem der Ansprüche 4 bis 6, **dadurch gekennzeichnet, dass** das ausgeschleuste Schüttgut (10) verhaldet und separierte Fremdkörper getrennt deponiert werden.

## Claims

1. Mobile comminution plant (16) for comminuting mineral primary raw materials or secondary raw materials, having a conveyor belt arrangement (1) which has the following features:
a) a conveyor belt (3) for conveying a bulk material (10) in a first conveying direction (F1) to a discharge end (14) of the conveyor belt (3);
b) a drive (22) of the conveyor belt (3), wherein the controller (21) is designed to control the drive (22) of the conveyor belt (3);
c) the conveyor belt (3) is reversible by means of the controller (21) in order to remove the bulk material (10) on the conveyor belt (3) including the foreign body in the opposite direction to the first conveying direction (F1) in the event of a foreign body, and then to reverse again in order to transport further bulk material (10) in the first conveying direction (F1);
**characterised by** the following features:
d) at least one detection device (6) arranged on the conveyor belt (3) for detecting unwanted foreign bodies in the bulk material (10) on the conveyor belt (3);
e) a controller (21) which is connected to the at least one detection device (6) in a signal-processing manner in order to reverse the conveyor belt (3) when a foreign body is detected;
f) a discharge device (7) is designed to receive the removed bulk material (10);
g) the discharge device (7) has a further conveyor belt (9);
h) the discharge device (7) has at least one separating device (12) for separating foreign bodies from the bulk material.

2. Mobile comminution plant (16) according to claim 1, **characterised in that** the separating device (12) has means for detecting ferrous metals and/or non-ferrous metals.

3. Mobile comminution plant (16) according to claim 1 or 2, having a meterable feed unit (4) for feeding bulk material (10) onto the conveyor belt (3), wherein the feed unit (4) is connected to the controller (21) in order to stop the feeding of bulk material (10) when a foreign body has been detected.

4. Method for removing foreign bodies from a bulk material (10) in a mobile comminution plant (16) according to the features of any one of claims 1 to 3, comprising the following steps:
a) a bulk material (10) is fed onto a conveyor belt arrangement (1) of the mobile comminution plant (16) and transported in a first conveying direction (F1) of a conveyor belt (3) of the conveyor belt arrangement (1);
b) the bulk material (10) on the conveyor belt (3) is guided past at least one detection device (6) of the conveyor belt arrangement (1) in order to check the bulk material (10) for unwanted foreign bodies;
c) the at least one detection device (6) signals to a controller (21) when a foreign body has been detected;
d) the controller (21) controls a drive (22) of the conveyor belt (3) and reverses the conveyor belt (3) so that the bulk material (10) is removed with the foreign body counter to the first conveying direction (F1);
e) the removed bulk material (10) is transferred to a discharge device (7) which receives the bulk material (10) with the foreign body and transports it further;
f) the discharge device (7) has at least one separating device (12) which separates the foreign body from the removed bulk material (10);
g) the controller (21) reverses the conveyor belt (3) so as to continue from step a).

5. Method according to claim 4, **characterised in that** metallic foreign bodies are separated by means of the at least one separating device (12).

6. Method according to claim 4 or 5, **characterised in that** the bulk material (10) is fed onto the conveyor belt (3) by a metering feed unit (4), wherein the controller (21) actuates the feed unit (4), wherein the feeding of bulk material (10) is stopped when the at least one detection device (6) detects a foreign body.

7. Method according to any one of claims 4 to 6, **characterised in that** the discharged bulk material (10) is stockpiled and separated foreign bodies are deposited separately.

## Revendications

1. Installation de broyage (16) mobile pour le broyage de matières premières primaires ou matières premières secondaires minérales avec un agencement de bande de transport (1) qui présente les caractéristiques suivantes :
a) une bande de transport (3) afin de transporter un produit en vrac (10) dans un premier sens de transport (F1) à une extrémité de déversement (14) de la bande de transport (3) ;
b) un entraînement (22) de la bande de transport (3), dans laquelle la commande (21) est réalisée afin de commander l'entraînement (22) de la bande de transport (3) ;
c) la bande de transport (3) est réversible au moyen de la commande (21) afin de décharger pour un corps étranger le produit en vrac (10) sur la bande de transport (3) y compris le corps étranger à l'opposé du premier sens de transport (F1) afin de l'inverser de nouveau ensuite pour transporter un autre produit en vrac (10) dans le premier sens de transport (F1) ;
**caractérisée par** les caractéristiques suivantes :
d) au moins un dispositif de détection (6) qui est agencé au niveau de la bande de transport (3) afin de détecter des corps étrangers non souhaités dans le produit en vrac (10) sur la bande de transport (3) ;
e) une commande (21) qui est reliée en traitement de signal à l'au moins un dispositif de détection (6) afin d'inverser la bande de transport (3) en cas de corps étranger détecté ;
f) un dispositif de déviation (7) est réalisé afin de recevoir le produit en vrac (10) déversé ;
g) le dispositif de déviation (7) présente une autre bande de transport (9) ;
h) le dispositif de déviation (7) présente au moins un dispositif de séparation (12) afin de séparer des corps étrangers du produit en vrac.

2. Installation de broyage (16) mobile selon la revendication 1, **caractérisée en ce que** le dispositif de séparation (12) présente des moyens de reconnaissance de métaux ferreux et/ou de métaux non ferreux.

3. Installation de broyage (16) mobile selon la revendication 1 ou 2, avec une unité de chargement (4) dosable pour charger le produit en vrac (10) sur la bande de transport (3), dans laquelle l'unité de chargement (4) est reliée à la commande (21) afin d'arrêter le chargement du produit en vrac (10) lorsqu'un corps étranger a été détecté.

4. Procédé de retrait de corps étrangers d'un produit en vrac (10) pour une installation de broyage (16) mobile selon les caractéristiques d'une des revendications 1 à 3 avec les étapes :
a) un produit en vrac (10) est donné sur un agencement de bande de transport (1) de l'installation de broyage (16) mobile et transporté dans un premier sens de transport (F1) d'une bande de transport (3) de l'agencement de bande de transport (1) ;
b) le produit en vrac (10) sur la bande de transport (3) est guidé le long d'au moins un dispositif de détection (6) de l'agencement de bande de transport (1) afin de vérifier le produit en vrac (10) quant aux corps étrangers non souhaités ;
c) l'au moins un dispositif de détection (6) signale à une commande (21) lorsqu'un corps étranger a été détecté ;
d) la commande (21) commande un entraînement (22) de la bande de transport (3) et inverse la bande de transport (3) de sorte que le produit en vrac (10) soit déversé avec le corps étranger dans le sens inverse au premier sens de transport (F1) ;
e) le produit en vrac (10) déversé est transmis à un dispositif de déviation (7) qui reçoit et transporte encore le produit en vrac (10) avec le corps étranger ;
f) le dispositif de déviation (7) présente au moins un dispositif de séparation (12) qui sépare le corps étranger du produit en vrac (10) déversé ;
g) la commande (21) inverse la bande de transport (3) afin de continuer à l'étape a).

5. Procédé selon la revendication 4, **caractérisé en ce que** des corps étrangers métalliques sont séparés au moyen de l'au moins un dispositif de séparation (12).

6. Procédé selon la revendication 4 ou 5, **caractérisé en ce que** le produit en vrac (10) est donné d'une unité de chargement (4) dosable à la bande de transport (3), dans lequel la commande (21) commande l'unité de chargement (4), dans lequel le chargement de produit en vrac (10) est arrêté lorsque l'au moins un dispositif de détection (6) détecte un corps étranger.

7. Procédé selon l'une quelconque des revendications 4 à 6, **caractérisé en ce que** le produit en vrac (10) dévié est déchargé et des corps étrangers séparés sont éliminés de manière séparée.
